# EUROPÄISCHE PATENTANMELDUNG

(11) **EP 1 273 963 A1**
(43) Veröffentlichungstag der Anmeldung: **08.01.2003**
(21) Anmeldenummer: 01115701.3
(22) Anmeldetag: 05.07.2001
(51) Int. Cl.: G03B 27/73

(54) **Kundenspezifische Bilddatenverarbeitung**

(71) Anmelder: IMIP LLC, Wilmington, Delaware 19801 (US)
(72) Erfinder: Franzke, Dieter, 5210 Windisch (CH); Näf, Markus, 8032 Zürich (CH)
(74) Vertreter: Schwabe - Sandmair - Marx

(57) **Zusammenfassung**

Die Erfindung betrifft eine Bilddatenverarbeitungseinrichtung für fotografische Bilddaten mit einem Eingang zum Eingeben digitaler, fotografischer Bilddaten und erfindungsgemäß von Individualisierungs-Identifikationsdaten, die den Bilddaten zugeordnet sind, wobei eine Zuordnungseinrichtung aufgrund der den Bilddaten zugeordneten Individualisierungs-Identifikationsdaten Manipulations-Parameter zuteilt, die dazu verwendet werden, die zu optimierenden Bilddaten in einer Bilddaten-Änderungseinrichtung zu verändern, um die dabei entstehenden Zielbilddaten über einen Ausgang beispielsweise in der Form eines Fotoprinters auszugeben.

## Beschreibung

Die vorliegende Erfindung betrifft eine Bilddatenverarbeitungseinrichtung, die insbesondere in einem Fotoprinter oder einem Fotolabor verwendet wird.

Fotografische Bilddaten, werden herkömmlicherweise durch Scannen eine Films oder direkt von digitalen Datenträgern oder via Internet oder Netzwerken einer Bilddatenverarbeitungseinrichtung zugeführt. Die Bilddatenverarbeitungseinrichtung führt üblicherweise Korrekturprozesse durch, um die Bilddaten zu optimieren (z.B. Eye-Tech-Processing, siehe z. B. EP 96 810 235.0, EP 96 810 499.2, EP 96 810 554.4, EP 99 101 595.9, EP 00 100 242.7, EP 00 104 491.6). Diese Korrekturverarbeitungen und Optimierungsprozesse bezwecken häufig, die Bilddaten so aufzubereiten, dass das letztendlich gedruckte fotografische Bild so "realitätsnah" wie möglich ist. Dabei bedeutet "realitätsnah", dass der vom Fotografen beim Aufnahmevorgang beobachtete Bildeindruck möglichst genau wiedergegeben wird. Herkömmliche Verfahren basieren hierbei insbesondere auf einer Bilddatenanalyse. Manche Verfahren können beispielsweise auch den Filmtyp, falls er bekannt ist, bei der Bilddatenanalyse berücksichtigen, um so beispielsweise filmtypische Farbverschiebungen zu korrigieren.

Nachteilig an den oben genannten Verfahren ist, dass sie weder den Individualgeschmack eines Kunden noch zu Gruppen zusammenfassbare Individualgeschmäcker von Kunden berücksichtigen können.

Aufgabe der Erfindung ist es, eine Bilddatenverarbeitungseinrichtung und ein Verfahren zur Bilddatenverarbeitung bereitzustellen, die eine individuelle Verarbeitung der Bilddaten für den einzelnen Kunden oder für Kundengruppen ermöglichen, um so den kundenspezifischen Anforderungen an die subjektive Erscheinung von Bildern bestmöglich genügen zu können.

Díe vorstehende Aufgabe wird durch die Gegenstände der unabhängigen Ansprüche gelöst. Vorteilhafte Weiterbildungen gehen aus den Unteransprüchen hervor.

Die erfindungsgemäße Bilddatenverarbeitungseinrichtung empfängt die zu verarbeitenden fotografischen Bilddaten z.B. von einem Scanner. Zusätzlich zu den fotografischen Bilddaten empfängt sie Individualisierungs-Identifikationsdaten. Diese bezeichnen beispielsweise eine Kundennummer oder ein gewisses Geschmacksprofil (z.B. Vorliebe für satte Farben, Hauttönungen etwas dunkler als real, etc.) oder Kundendaten bzw. ein Kundenprofil (z.B. Geschlecht oder Alter des Kunden oder Staatsangehörigkeit oder Land oder Wohnort) und ein damit typischerweise verbundenes Geschmacksprofil. So können die erfindungsgemäßen Bildverarbeitungseinrichtungen beispielsweise mit länderspezifischen Individualisierungs-Identifikationsdaten versehen sein, die dazu führen, dass der jeweilige "Landesgeschmack" optimal getroffen wird. Je nach Lieferort können die länderspezifischen bzw. regionspezifischen Individualisierungs-Identifikationsdaten voreingestellt sein. Sie können aber auch auswählbar gestaltet werden. Vorzugsweise kann auch mittels einer Kundennummer auf einen Kundendatenspeicher zugegriffen werden und basierend auf den gespeicherten Kundendaten, wie z.B. Geschlecht, Alter, Staatsangehörigkeit, Regionszugehörigkeit (z.B. Europa, Asien, Amerika, etc.) dann eine Geschmacksprofildatenbank aufgerufen werden und das zu den jeweiligen Kundendaten passende Geschmacksprofil und der dem Geschmacksprofil und die den Geschmacksprofil zugeordneten bzw. entsprechenden Individualisierungs-Identifikationsdaten abgerufen werden. Vorzugsweise werden also basierend auf Kundendaten Individualisierungs-Identifikationsdaten, die den Kundendaten z.B. in einem Speicher zugeordnet sind, bestimmt. Vorzugsweise sind die Individualisierungs-Identifikationsdaten den empfangenen Bilddaten jeweils zugeordnet.

Die Bilddaten können in einem Schritt beispielsweise einer herkömmlichen Bilddatenoptimierungseinrichtung zugeführt werden, die z.B. Dynamikbereichsanpassungen, Helligkeitskorrekturen, Farbwertkorrekturen usw. durchführt. Gemäß einer Ausführungsform der Erfindung erfolgt dieser Optimierungsvorgang in Abhängigkeit von Manipulations-Parametern. Die Manipulations-Parameter legen beispielsweise den Umfang der Aufhellung, das Ausmaß der Farbkorrektur, usw. fest. Sie greifen also regelnd in den Optimierungsvorgang ein. Die Manipulations-Parameter sind für die jeweiligen Individualisierungs-Identifikationsdaten gespeichert. Dies bedeutet, dass für jeden einzelnen Kunden oder für Kundengruppen oder für bestimmte Länder mittels der Individualisierungs-Identifikationsdaten eine spezifische Bilddatenoptimierung durchgeführt werden kann.

Gemäß der Erfindung wird auch ein Verfahren zur Anpassung von Bilddaten an individuelle Kundenwünsche zur Lösung der der Erfindung zugrunde liegenden Aufgabe bzw. Aufgaben vorgeschlagen. Dabei werden Daten über kundenspezifisch optimierte Bilddaten in Bezug auf wenigstens ein Eichbild bzw. Kalibrierbild ermittelt, um Individualisierungs-Identifikationsdaten zu erstellen. Dabei kann ein Kunde oder Kundengruppe mit gleichem Kundenprofil wenigstens ein Eichbild und Abwandlungen hiervon betrachten, wobei bestimmte Abwandlungen eines Eichbildes in der Farbe, der Schärfe, im Kontrast, usw. in vorgebbaren Schritten vorgesehen sein können. Der Kunde oder die Kundengruppe kann dann ein bestimmtes Bild auswählen, das seinen Vorstellungen und seinem Farbempfinden bzw. seinem Schönheitsempfinden am ehesten entspricht. Aufgrund dieser Auswahl können dann Individualisierungs-Identifikationsdaten erstellt werden, aufgrund derer dann Manipulations-Parameter ermittelt und dem kundenspezifischen Individualisierungs-Identifikationsdaten zugeordnet werden können. Bei einer Kundengruppe erfolgt dies beispielsweise durch eine Mitteilung der von den einzelnen Mitgliedern der Kundengruppe getroffenen Auswahl. Die ermittelten Individualisierungs-Identifikationsdaten bzw. die ermittelten Manipulations-Parameter können dann abgespeichert werden, um, wenn der Kunde oder die Kundengruppe beliebige Bilddaten in der Form von Filmnegativen, von Speicherinhalten von Digitalkameras oder dgl. zur Herstellung von Fotoprints abgibt, eingesetzt zu werden, um zur Wiedergabe vorgesehene Bilddaten mittels der Manipulations-Parameter abzuändern. Die geänderten Bilddaten können dann aufgrund der Manipulation kundenspezifisch optimiert als Zieldaten ausgegeben werden.

Um einen entsprechenden Optimierungsservice in Anspruch zu nehmen, kann einem Kunden beispielsweise eine Smart-Card übergeben werden, die entsprechende Individualisierungs-Identifikationsdaten und/oder Manipulations-Parameter enthält, die bei Auftragserteilung bzw. Abgabe eines Auftrages zur Entwicklung eines Filmes, zum Printen eines Bildinhaltes eines Speichers einer Digitalkamera, usw. eingelesen und für den Fotofinishing-Prozess herangezogen werden können.

Dabei ist es natürlich auch sinnvoll, Bilder in diverse Klassen von Bildern zu unterteilen, beispielsweise Landschaftsaufnahmen, Portraitaufnahmen, Nachtaufnahmen, Blitzlichtaufnahmen, Winterlandschaftsbilder, usw., und für eine bestimmte Auswahl derartige Bildklassen oder für sämtliche derartige häufig vorkommende Bildklassen einen entsprechenden Prozess mit einem Eichbild und dessen Abwandlungen vorzunehmen, um beispielsweise bei der ersten Inanspruchnahme der Dienstleistung zur Erstellung von kundenspezifisch optimierten Bildabzügen fundiertere Informationen sammeln zu können. Zwar ist es möglich, dass Kunden allgemein einen Wunsch haben, ein möglichst strahlendes himmelblau, möglichst zart gebräunte menschliche Haut, usw. auf den Bildern wiederzufinden, jedoch ist es auch möglich, dass für bestimmte Bildklassen ein schwächerer oder stärkerer Kontrast, eine höhere Schärfe, oder dgl. gewünscht wird, was durch die Erfassung von Individualisierungs-Identifikationsdaten für verschiedene Bildklassen wesentlich besser erfasst und letztlich durchgeführt werden kann.

Dabei ist es auch möglich, nicht nur Bilder zu klassifizieren, sondern auch Kunden in verschiedene Klassen einzuteilen, etwa solche, die ein bestimmtes himmelblau bevorzugen und solche, die bestimmte braune Hauttypen zu sehen wünschen. Es ist dann möglich, nochmals optimierte und vereinfachte Manipulations-Parameter zu bestimmen, um diese für eine bestimmte Kundengruppe zum Einsatz bringen zu können. Es wäre dann nur noch erforderlich, beispielsweise mit einer zwei- oder dreistelligen Zahl oder einem entsprechend mehrstelligen Code eine größere Anzahl von Kunden einen bestimmten Satz von Manipulations-Parametern zuzuordnen. Lediglich bei Beanstandungen dieser Kunden könnten dann entsprechende Kunden in andere Klassen eingeordnet werden, die andere Manipulations-Parameter aufweisen. Für nicht klassifizierbare Kundenwünsche könnten separat Individualisierungs-Identifikationsdaten und/oder Manipulations-Parameter errechnet und abgespeichert werden. Die Manipulations-Parameter könnten dabei auch geräteunabhängig mit einer Eichung versehen sein und bei Anwendung der Manipulations-Parameter innerhalb eines Fotoprinters der Anmelderin könnten bestimmte Anpassungen der Parameter vorgenommen werden, während bei Fotoprintern von anderen Herstellern andere Anpassungen durchgeführt werden könnten, wobei die Anpassungsparameter auch gleich zum Manipulations-Parametersatz gehören könnten.

Andererseits ist es auch möglich, wenn Kunden nicht zunächst mit einem Eichbild und dessen Abwandlungen oder mehreren Eichbildern und deren Abwandlungen belastet werden sollen, einen Kunden zunächst einer bestimmten Klasse von Individualisierungs-Identifikationsdaten bzw. den diesen Daten zugeordneten Manipulations-Parametern zuzuordnen, wobei diese Zuordnung nach Wahrscheinlichkeiten erfolgen kann. So ist es in der Regel der Fall, dass insbesondere sog. Gedächtnisfarben (memory color), die sich Menschen besonders einprägen oder als besonders angenehm empfinden, eine überwiegende Anzahl von Kunden besonders ansprechen. Auch werden bestimmte Konstellationen von Tiefenschärfe/Kontrast und/oder dgl. von einer überwiegenden Anzahl von Kunden als besonders angenehm empfunden. Auf diese Weise kann zunächst einem Kunden ein Satz von Manipulations-Parametern zugeordnet werden, der besonders wahrscheinlich ist. Erst später, wenn der Kunde bestimmte Fotografien beanstandet, kann etwa abhängig von der Bildklasse, in die die beanstandeten Bilder fallen, eine Änderung der Individualisierungs-Identifikationsdaten und/oder der entsprechenden Manipulations-Parameter vorgenommen werden, um eine weitere Anpassung der Bilder an spezifische Kunden vornehmen zu können.

Sollte ein Kunde mit seinen Wünschen sehr dicht an den Bilddaten liegen, die nach der Optimierung aufgrund einer herkömmlichen Bilddatenoptimierung erzielt werden, könnte ein Schwellenwertintervall definiert werden, innerhalb dessen Kundenwünsche für sämtliche oder bestimmte Bildklassen nicht berücksichtigt werden. D.h., wenn einer Kundenklasse oder bestimmten Kunden Bilder gefallen, die lediglich routinemäßig optimiert worden sind, können etwaige Individualisierungs-Identifikationsdaten ignoriert werden, da diese nur minimalste Änderungen erbringen können, und somit Rechen- und Bearbeitungszeit kosten, jedoch keine merklich höhere Akzeptanz bzw. Zufriedenheit beim Kunden auslösen.

Um festzustellen, inwieweit eine kundenspezifische Manipulation an Bilddaten erforderlich ist, können beispielsweise bestimmte Stützstellen aus den Bilddaten eines Bildes entnommen werden, um zu prüfen, ob ein blau nach seiner routinemäßigen Optimierung bereits ausreichend einem spezifischen Kundenwunsch bzw. einer Gedächtnisschlüsselfarbe (memory color) entspricht oder nicht. Wird aufgrund einer Anzahl von Stützstellen aus den Bilddaten eines Bildes ermittelt, dass die Differenz zwischen dem Kundenwunsch und den bereits vorhandenen Bilddaten vernachlässigbar ist bzw. innerhalb eines Akzeptanzinervalles liegt, kann die zusätzliche Verarbeitung der Bilddaten unterbleiben.

Die Individualisierungs-Identifikationsdaten kann der Kunde natürlich auch on-line, etwa über Internet, Datenleitung, oder dgl. übermitteln. Es ist auch möglich, entsprechende Individualisierungs-Identifikationsdaten bzw. Manipulations-Parameter beispielsweise in einen Speicher einer Digitalkamera einzugeben, so dass diese Daten präsent sind, wenn die digital vorliegenden Bilddaten der Kamera zur Herstellung von Abzüge eingesetzt werden sollen. Es ist auch möglich, die betreffenden Individualisierungs-Identifikationsdaten und/oder Manipulations-Parameter beispielsweise in der Form von anbringbaren, insbesondere aufklebbaren Bar-Code-Streifen beispielsweise auf Auftragstaschen mit Filmnegativen aufgeklebt dem Fotolabor zu übermitteln. Hier sind dem Fachmann diverse verschiedene Methoden bekannt, um die betreffenden Daten eines bestimmten Kunden für die Entwicklung präsent zu haben.

Bei einer alternativen Ausführungsform können die Bilddaten zuerst oder später einer herkömmlichen Optimierungseinrichtung zugeführt werden. Die dann optimierten Bilddaten werden danach der Bilddaten-Änderungseinrichtung zugeführt. In dieser Bilddaten-Änderungseinrichtung werden dann die optimierten Bilddaten beispielsweise im Hinblick auf ihren Farbwert (Farbton, Farbsättigung, etc.) in Abhängigkeit von den kundenspezifischen Manipulations-Parametern (z.B. mittels digitalen Masken) manipuliert. Die Manipulations-Parameter, die bei diesem Vorgang zu verwenden sind, werden wiederum mittels der Individualisierungs-Identifikationsdaten ermittelt.

Gemäß einem Beispiel sind somit Individualisierungs-Identifikationsdaten zusammen mit zugeordneten Manipulations-Parametern in einer Tabelle bzw. Datenfeldern gespeichert. Die Bilddaten werden dann basierend auf den Manipulations-Parametern, die in der Tabelle z.B. einer Kundennummer oder einem ausgewählten Geschmacksprofil zugeordnet sind, geändert. Beispielsweise wird, falls dies ein Kunde vorzieht, die Farbsättigung von Himmelsblautönen erhöht oder der Farbton von Gesichtsfarben etwas ins rötliche verschoben. Auch kann kundenspezifisch eine Weichzeichnung oder Schärfung des Bildes oder von Bildteilen (z.B. Weichzeichnung des Gesichts) mittels der Manipulations-Parameter vorgenommen werden. Ebenfalls kann die Manipulation bildklassenabhängig oder kundenklassenabhängig vorgenommen werden, z.B. eine Abdunklung und Farbtonänderung nur bei Strandbildern (z.B. entsprechend dem Blick durch eine Sonnenbrille).

Ferner kann beispielsweise für Profifotografen vorgesehen werden, dass die Bilddaten nicht optimiert werden oder nur im begrenzten Umfang optimiert werden, um so zu vermeiden, dass gewollte künstlerische Effekte verfremdet werden.
Nachfolgend wird die vorliegende Erfindung anhand von bevorzugten Ausführungsbeispielen näher erläutert, wobei weitere Zielsetzungen, Vorteile und Merkmale gemäß der Erfindung offenbart werden. In den Darstellungen zeigen:
- Fig. 1: ein Blockdiagramm einer speziellen Bilddatenverarbeitungseinrichtung mit Merkmalen gemäß der Erfindung, wobei die dargestellten Blöcke gleichfalls Schritte gemäß einer vorteilhaften Variante eines erfindungsgemäßen Verfahrens wiedergeben;
- Fig. 2: ein verfeinertes Blockdiagramm eines Abschnittes gemäß Fig. 1; und
- Fig. 3: eine alternative Ausführungsform zu der bevorzugten Ausführungsform gemäß Fig. 1 in einer Blockdarstellung.

In den Figuren sind gleiche oder wenigstens funktionsgleiche Bestandteile bzw. Verfahrensschritte mit den gleichen Bezugszeichen gekennzeichnet. Dementsprechend erübrigt sich eine mehrfache Erörterung derselben Bestandteile.

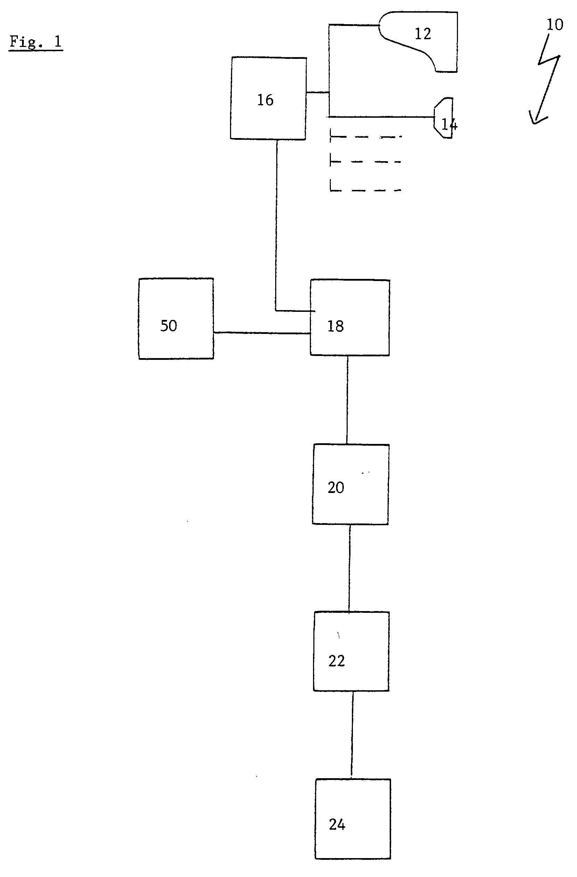

Die Fig. 1 zeigt eine erste Ausführungsform einer Bildverarbeitungseinrichtung 10 mit Merkmalen gemäß der Erfindung.

Die Einrichtung 10 erhält diverse Daten über einen Scanner 12, über einen Datenleitungsanschluss 14, oder dgl., beispielsweise über Internet. Die gestrichelten Linien sollen andere mögliche Datenschnittstellen bezeichnen, die in der Einrichtung 10 enthalten sind. Die eingehenden Daten können digitale fotografische Bilddaten und/oder Individualisierungs-Identifikationsdaten sein. Diese Daten können natürlich auch gespeichert sein, so dass zu den Einrichtungen, über die die Eingangseinrichtung 16 Informationen erhält, auch ein Speicher oder auch Einlesestationen für Speicher von Digitalkameras gehören können.

Die in der Eingangseinrichtung 16 ankommenden fotografischen Bilddaten und die Individualisierungs-Identifikationsdaten werden einander zugeordnet gehandhabt und eine Zuordnungseinrichtung 18 kann die den Bilddaten eines Kundenauftrages zugeordneten Individualisierungs-Identifikationsdaten bestimmten Manipulations-Parametern zuordnen, die dazu herangezogen werden sollen, die Bilddaten einem Wunsch bzw. Schönheitsempfinden eines spezifischen Kunden angepasst zu werden. Festzuhalten ist, dass die Individualisierungs-Identifikationsdaten natürlich auch unmittelbar, je nach Normierung oder Übertragbarkeit auf den Prozess zur Bilddatenänderung, durch die Manipulations-Parameter repräsentiert sein können, bzw. diese unmittelbar darstellen. D.h., die Individualisierungs-Identifikationsdaten, die zur Berechnung von Manipulations-Parametern eingesetzt werden sollen, können auch unmittelbar den Manipulations-Parametern entsprechen, die ohne weitere Anpassung zur Änderung der zu optimierenden Bilddaten herangezogen werden können.

Eine Bilddaten-Änderungseinrichtung 22 kann die Manipulations-Parameter heranziehen, um die zu optimierenden Bilddaten entsprechend den Manipulations-Parametern zu modifizieren, um Zielbilddaten zu erstellen. Letztlich kann ein Ausgang, beispielsweise in der Form eines Druckers, einer DMD-Belichtungseinheit, eines Tintenstrahldruckers oder ähnlicher Bestandteile dazu herangezogen werden, die Zielbilddaten auszugeben, indem diese etwa auf fotoempfindliches Papier abgebildet werden oder etwa mittels Tintenstrahlauftrag auf ein Papier wiedergegeben werden.

In Fig. 1 ist als eine mögliche Abwandlung dargestellt, wie beispielsweise mittels einer Einheit 50 zur Ermittlung von Individualisierungs-Identifikationsdaten selbige Daten ermittelt und eingesetzt werden können. D.h., die Einheit 50 stellt je nach der gewünschten bzw. erforderlichen Art Individualisierungs-Identifikationsdaten zur Verfügung, die kundenspezifisch oder kundengruppenspezifisch sind, um Bilddaten an Kundenwünsche oder Kundengruppenwünsche anpassen zu können.

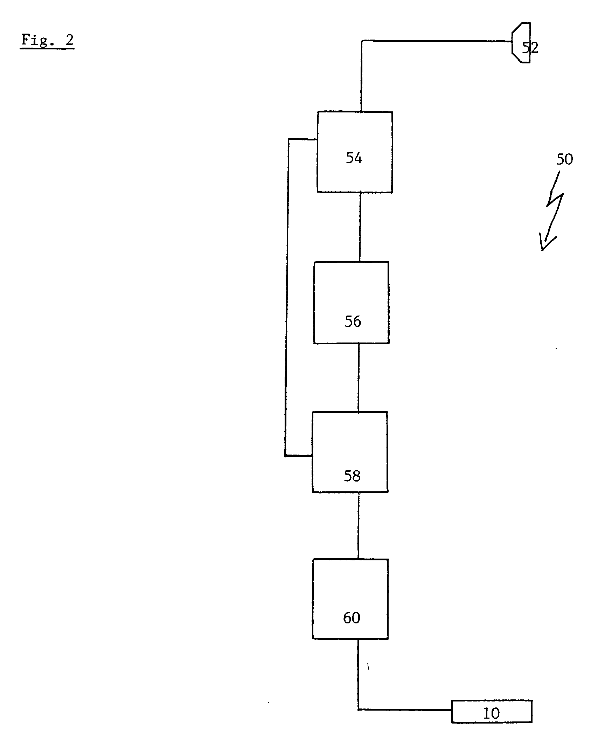

Dabei kann die Einrichtung 50 gemäß Fig. 2 aufgebaut sein. Über einen Datenleitungsanschluss, etwa einen Internetanschluss 52 können beispielsweise Individualisierungs-Identifikationsdaten eingelesen werden. Andererseits kann ein entsprechender Individualisierungs-Identifikationsdatensatz auch unmittelbar am Ort durch Testdatenerfassung, z.B. die Erfassung von Testbildern oder die Erfassung von Fehlerbeanstandungen, ermittelt werden, um entsprechende Daten auszuwerten, eventuell abzuspeichern, oder sonst wie gemäß der Erfindung oder anders mit diesen Daten zu verfahren. Natürlich ist bei der Testdatenerfassung darauf zu achten, dass die Testdaten mit Zustimmung der Kunden erfasst werden, um gesetzlichen Datenschutzbestimmungen genügen zu können. Die Einrichtung zur Erfassung der Testdaten, aufgrund derer die Individualisierungs-Identifikationsdaten ermittelt werden, kann an eine Eingruppierungsvorrichtung 56 angeschlossen sein. Diese Eingruppierungsvorrichtung ist dazu vorgesehen, um bestimmte kundenspezifische Individualisierungs-Identifikationsdaten beispielsweise einer Kundengruppe zuzuordnen, die innerhalb eines bestimmten Intervalls gleiche Vorlieben in Bezug auf die wiederzugebenden Bilddaten haben. Sollte eine Gruppierung nicht möglich sein, weil ein entsprechender Kunde spezielle Wiedergabewünsche hat, können die Individualisierungs-Identifikationsdaten des Kunden unklassifiziert an eine evtl. anordenbare Schwellenwerteinrichtung 58 weitergeleitet werden. Die Schwellenwerteinrichtung 58 kann über beispielsweise ein Schwellenwertintervall oder konkrete Schwellenwerte dafür sorgen, dass Individualisierungs-Identifikationsdaten in einer bestimmten Art oder gar nicht berücksichtigt werden, falls z.B. die Individualisierungs-Identifikationsdaten nur zu geringen Änderungen der Bilddaten führen oder zu Änderungen führen, die bereits automatisch durch eine herkömmliche Bilddatenoptimierung erzielbar sind. Auch hier können etwa Stützstellen innerhalb der Bilddaten herangezogen werden, um anhand der Stützstellen zu bestimmen, wie sich eine entsprechende Änderung der Bilddaten sich auswirken wird.

Ferner kann zusätzlich eine Statistikeinrichtung 60 vorgesehen sein, die statistische Daten erfasst, um bestimmen zu können, welche durchschnittlichen Kundenwünsche vorhanden sind, um auf diese Art und Weise eine generelle Modifikation von Bilddaten vornehmen zu können. D.h., auf diese Weise kann eine herkömmliche Bilddatenoptimierung beeinflusst werden und einem allgemeinen Trend des Kundengeschmacks angepasst werden, egal ob diese den zusätzlichen Service einer Bilddatenverarbeitungseinrichtung gemäß der Erfindung in Anspruch nehmen wollen oder nicht.

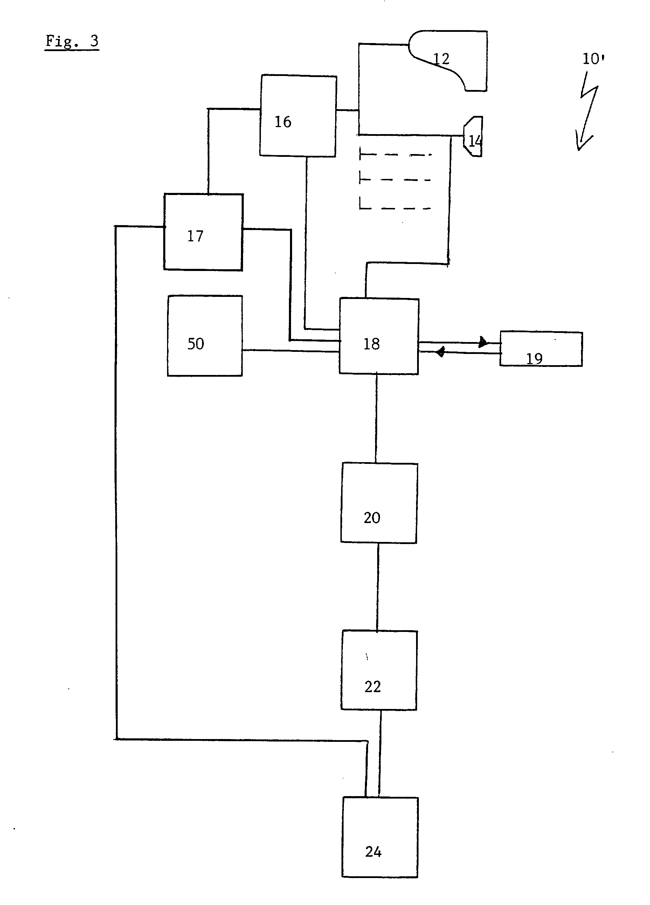

Letztlich werden die für die Weiterverarbeitung bestimmten Individualisierungs-Identifikationsdaten an die Einrichtung 10 bzw. 10' gemäß der Fig. 1 oder der Fig. 3, die noch zu erläutern ist, übermittelt.

In der Fig. 3 ist ein Aufbau dargestellt, bei dem die Bestandteile gemäß den Fig. 1 und 2 zum Einsatz gelangen können.

Darüber hinaus ist hier eine Bilddatenoptimierungseinrichtung 17 vorgesehen, die Bilddaten optimieren kann, bevor eine kundenspezifische Änderung der Bilddaten in der Bilddaten-Änderungseinrichtung 22 erfolgt.

Gemäß Fig. 3 kann die Zuordnungseinrichtung 18 Manipulations-Parameter unmittelbar über Datenleitung von einem Datenanschluss bzw. Internetanschluss oder dgl. 14 abfragen oder über die Einrichtung zur Ermittlung von Individualisierungs-Identifikationsdaten 50 erhalten.

Eine herkömmliche Bilddatenoptimierungseinrichtung 17 kann die Bilddaten unmittelbar von der Eingangseinrichtung 16 erhalten um diese aufgrund beliebiger auch herkömmlicher Bilddatenaufbereitungsverfahren allgemein vorzuoptimieren. Die Bilddatenoptimierung kann dabei auch von der Einrichtung 50 her beeinflusst werden, beispielsweise durch die Statistikeinrichtung 60 gemäß Fig. 2.

Mittels einer Schwellenwerteinrichtung 19 kann erfasst werden, ob Bilddaten aufgrund von ermittelten Manipulations-Parameter innerhalb bestimmter Grenzen in Bezug auf das bereits durch die Einrichtung 17 optimierte Bild sind, so dass eine weitere, weil kaum oder gar nicht sichtbare Manipulation der Bilddaten unterbleiben kann. In diesem Fall kann die Schwellenwerteinrichtung 19 einen Befehl an die Einrichtung 18 geben, so dass Bilddaten keine weitere kundenspezifische Manipulation mehr erfahren, sondern beispielsweise unmittelbar von der herkömmlichen Optimierungseinrichtung 17 zur Ausgabeeinrichtung 24 weitergeleitet werden.

Wie oben bereits angedeutet, kann der gemäß der Erfindung erforderliche Satz von Individualisierungs-Identifikationsdaten auf beliebige Art erstellt werden. Angefangen damit, dass Individualisierungs-Identifikationsdaten einem Kunden willkürlich zugeordnet werden können, um dessen korrigierende Beanstandungen abzuwarten, bis dahin, dass der betreffende Kunde in aufwändiger Weise einen eigenen Individualisierungs-Identifikationsdaten erstellt, sind eine Vielzahl von verschiedenen Verfahrensweisen möglich, um einen entsprechenden Individualisierungs-Identifikationsdatensatz erstellen zu können. Dabei kann mittels Statistik ein erster oder auch abschließender Individualisierungs-Identifikationsdatensatz teilweise oder vollständig automatisch erstellt werden. Dies kann auch per Internet, per Post oder anders durchgeführt werden.

Die für einen Kunden spezifisch ermittelten und gespeicherten Individualisierungs-Identifikationsdaten bzw. Manipulations-Parameter können abhängig von dem späteren Kundenverhalten, also beispielsweise abhängig von Beanstandungen oder Hinweisen, nachträglich manipuliert und an Kundenwünsche oder sich ändernde Kundenwünsche angepasst werden.

## Patentansprüche

1. Bilddatenverarbeitungseinrichtung für fotografische Bilddaten mit einem Eingang zum Eingeben digitaler, fotografischer Bilddaten und von Individualisierungs-Identifikationsdaten (Kundenname, spezielle Kundenwünsche), die den Bilddaten zugeordnet sind;
einem Zuordner, der den Bilddaten mittels der Individualisierungs-Identifikationsdaten Manipulations-Parameter zuordnet;
einer Bilddaten-Änderungseinrichtung, die die zu optimierenden Bilddaten entsprechend zu den Manipulations-Parametern ändert, um Zielbilddaten zu erstellen; einem Ausgang, der die Zielbilddaten ausgibt.

2. Bilddatenverarbeitungseinrichtung nach Anspruch 1, **dadurch gekennzeichnet, dass** die Bilddaten-Änderungseinrichtung die Bilddaten so ändert, dass Bildeigenschaften (z.B. Farbwerte, Bildschärfe, Hell-Dunkel-Dynamikumfang etc.) in Abhängigkeit von den Manipulations-Parametern geändert werden.

3. Bilddatenverarbeitungseinrichtung nach Anspruch 1 oder 2, **dadurch gekennzeichnet, dass** die Bilddaten-Änderungseinrichtung die durch die Bilddaten dargestellten Farbwerte (z.B. Farbsättigung, Farbton, Helligkeit) in Abhängigkeit von den Manipulations-Parametern ändert.

4. Bilddatenverarbeitungseinrichtung nach Anspruch 1 oder 3, **dadurch gekennzeichnet, dass** die Bilddaten-Änderungseinrichtung die Farbwerte lokal, insbesondere in charakteristischen Bildbereichen (z.B. Gesicht, Vegetation, Himmel etc.) in Abhängigkeit von den Manipulations-Parametern ändert.

5. Bilddatenverarbeitungseinrichtung nach Anspruch 1 oder 4, **dadurch gekennzeichnet, dass** die Bilddaten-Änderungseinrichtung das Ausmaß der Änderungen in Abhängigkeit von den Manipulations-Parametern durchführt (z.B. Amateurfotograf, Profifotograf).

6. Bilddatenverarbeitungseinrichtung nach Anspruch 1 oder 5, **dadurch gekennzeichnet, dass** die Bilddaten-Änderungseinrichtung
einen Bilddaten-Optimierer umfasst, der die Bilddaten basierend auf gegebenen Standard-Informationen (Bilddaten-Analyse, Kameratyp, Filmtyp) unabhängig von den Manipulations-Parametern optimiert,
und einen Bilddaten-Manipulator umfasst, der die optimierten Bilder entsprechend den Parametern manipuliert oder keine Manipulation in Abhängigkeit von Manipulations-Parametern durchführt oder ein Ausmaß der Manipulation in Abhängigkeit von Manipulations-Parametern bestimmt und durchführt.

7. Fotografischer Printer oder fotografisches Labor, insbesondere Minilab zum Erzeugen fotografischer Bilder auf einem Medium mit der Bilddatenverarbeitungseinrichtung nach einem der Ansprüche 1 bis 6.

8. Verfahren zur Anpassung von Bilddaten an individuelle Kundenwünsche, mit den folgenden Schritten:
a) Daten über kundenspezifische optimierte Bilddaten werden in Bezug auf wenigstens ein Eichbild ermittelt, um Individualisierungs-Identifikationsdaten zu erstellen;
b) die Individualisierungs-Identifikationsdaten werden Manipulations-Parametern zugeordnet;
c) zur Wiedergabe vorgesehene Bilddaten werden mittels der Manipulations-Parameter geändert;
d) die geänderte Bilddaten werden kundenspezifisch optimiert als Zielbilddaten ausgegeben.

9. Verfahren nach Anspruch 8, **dadurch gekennzeichnet, dass** die Individualisierungs-Identifikationsdaten von spezifischen Kunden innerhalb vorgebbarer Intervalle zu Kundengruppen zusammengefasst werden und kundengruppenspezifischen Manipulations-Parametern zugeordnet werden.

10. Verfahren nach einem der Ansprüche 8 oder 9, **dadurch gekennzeichnet, dass** die zur Wiedergabe bestimmten Bilddaten nur dann kundenspezifisch geändert werden, wenn eine Abweichung zwischen den Bilddaten und den Zielbilddaten einen vorgebbaren Schwellenwert überschreitet.

11. Verfahren nach einem der Ansprüche 8 bis 10, **dadurch gekennzeichnet, dass** die Bilddaten von Bildern in verschiedene Klassen eingeteilt werden und kundenspezifisch optimierte Bilddaten werden in Bezug auf wenigstens ein Eichbild zu jeder Bildklasse ermittelt, um bildklassenspezifische Individualisierungs-Identifikationsdaten zu ermitteln.

12. Verfahren nach einem der Ansprüche 8 bis 11, **dadurch gekennzeichnet, dass** kundenspezifische bzw. kundengruppenspezifische Manipulations-Parameter aufgezeichnet bzw. gespeichert werden, um bei späteren Abbildungsaufträgen verwendet zu werden, bzw. bei späteren Kundenbeanstandungen modifiziert und dann verwendet zu werden.
